# EUROPEAN PATENT SPECIFICATION

(11) **EP 4 439 788 B1**
(45) Date of publication and mention of the grant of the patent: **03.12.2025**
(21) Application number: 24166287.3
(22) Date of filing: 26.03.2024
(51) Int. Cl.: H01M 10/48, H01M 50/204, H01M 50/249, H01M 50/503, H01M 50/507, H01M 50/509, H01M 50/519, H01M 50/569, H01M 50/213

(54) **BATTERY PACK**
BATTERIEPACK
BLOC-BATTERIE

(30) Priority: 26.03.2023 KR 20230039404; 10.07.2023 KR 20230089090
(43) Date of publication of application: 02.10.2024
(73) Proprietor: Samsung SDI Co., Ltd., Yongin-si, Gyeonggi-do 17084 (KR)
(72) Inventor: Lee, Jooyul, Yongin-si, Gyeonggi-do 17084 (KR)
(74) Representative: Gulde & Partner

(56) References cited:
- KR-B1- 102 006 686
- US-A1- 2014 234 668
- US-A1- 2017 047 572
- US-A1- 2019 081 370
- US-A1- 2023 085 453

## Description

### CROSS-REFERENCE TO RELATED APPLICATIONS

### BACKGROUND

### 1. Field

Embodiments relate to a battery pack.

### 2. Description of the Related Art

Generally, a secondary battery refers to a chargeable and dischargeable battery, unlike a primary battery that is not chargeable. Secondary batteries are used as energy sources for mobile devices, electric vehicles, hybrid vehicles, electric bicycles, uninterruptible power supplies, etc. According to a type of an external device they are applied to, secondary batteries may be used in the form of a single battery or in the form of a pack in which multiple battery cells are connected and grouped into one unit. For example, US 2014/0234668 A1 discloses a battery housing including a battery frame that holds a plurality of battery cells. Each battery cell includes a positive terminal and a conducting structure at one end, a negative terminal at the opposite end, and a conductive shell that electrically couples the negative terminal to the conducting structure. An interconnect creates an electrical connection between two cells by contacting either the conducting structure or the positive terminal of each cell. The cells are positioned so that the positive terminals, conducting structures, and interconnect are all on the same side of the battery frame. KR 102006686 B1 discloses sensing plates for a battery pack on which first and second conductive patterns are formed by a laser direct structure method.

Small mobile devices such as mobile phones may operate for a certain amount of time based on the output and capacity of a single battery, whereas for devices requiring long-term driving and high-power operations such as electric vehicles, hybrid vehicles, etc., consuming a lot of power, a secondary battery of a module type including a plurality of batteries may be preferred due to output and capacity issues. The output voltage or output current may be increased with the number of built-in batteries.

It was an object of the present invention to provide a battery pack which is favorable to compactness and may be manufactured by simple process without a separate connection component. In particular, it was an object to prevent deformation during the manufacturing process from occurring due to a difference in a shrinkage rate between metal and plastic. Thus, the present invention is directed to a battery pack in which, by replacing a bus bar electrically connecting a plurality of battery cells to each other with a conductive pattern on a cell holder, the cell holder may be formed integrally with the bus bar and a component for sensing a voltage and a temperature of the battery cell may be replaced with the conductive pattern on the cell holder.

### SUMMARY

The present invention is set out in the appended set of claims, wherein the drawings and respective description relate to advantageous embodiments thereof.

The present invention is directed to a battery pack, including a plurality of battery cells in a row in a first direction and in a plurality of rows in a second direction intersecting the first direction, a cell holder in which the plurality of battery cells are assembled at a first side thereof, a first conductive line of the cell holder plated and patterned at a second side opposite to the first side electrically connecting different battery cells to each other and extending in the second direction, wheren the first conductive line is configured to function as a bus bar, and a second conductive line plated and patterned at the second side of the cell holder to collect state information about different battery cells, wherein the first conductive line and the second conductive line are formed on the cell holder through laser direct structuring.

In embodiments the first conductive line may have a greater width than a width of the second conductive line.

In embodiments the plurality of battery cells may be arranged in parallel in the second direction and in series in the first direction and the first conductive line may be formed as a 1-shape structure extending in a zigzag pattern in the second direction.

In embodiments the second conductive line may include a voltage sensing line that may be connected to each first conductive line to sense a voltage and a temperature sensing line to sense a temperature at a certain position.

In embodiments the plurality of battery cells may be arranged such that battery cells in adjacent rows in the second direction may be alternately staggered with each other at front and rear positions in the first direction.

In embodiments the battery cells 10 of any one row may be arranged to be inserted into a valley between the battery cells 10 of an adjacent row.

In embodiments the battery cells 10 of any one row may be arranged to be biased relatively toward the front position or the rear position in the first direction Z1, and the battery cells 10 of the adjacent row may be arranged to be biased relatively toward the rear position or the front position in the first direction Z1.

In embodiments the first conductive line may include a plurality of first conductive lines electrically connecting the battery cells to each other, and each of the plurality of first conductive lines may extend between a first group of battery cells and a second group of battery cells, the first group of battery cells and the second group of battery cells may be adjacent to each other in the first direction and may be arranged in the second direction.

In embodiments the first group of battery cells and the second group of battery cells may be arranged in the second direction and may be connected to each other in parallel, and the first group of battery cells and the second group of battery cells may be connected to each other in series in the first direction.

In embodiments each of the plurality of first conductive lines may extend in a zigzag pattern and have a curved portion surrounding an outer circumferential surface of an electrode at a center position of the first and second groups of battery cells.

In embodiments, the battery cell 10 may be arranged to be surrounded by a front curved portion of the first conductive line at the front position and a rear curved portion of the first conductive line at the rear position.

In embodiments an end of the second conductive line may be connected to a battery management system, extend in the second direction, and include a plurality of branch lines.

In embodiments first and second electrodes at an end of a battery cell may be exposed to outside of the cell holder through first and second electrode holes in the cell holder and may be connected to the first conductive line through a connection member, and a second electrode selectively from the first and second electrodes may be at the other end of the battery cell.

### BRIEF DESCRIPTION OF THE DRAWINGS

Features will become apparent to those of skill in the art by describing in detail exemplary embodiments with reference to the attached drawings in which:
FIG. 1 shows an exploded perspective view of a battery pack according to embodiments;
FIG. 2 shows a plan view of a battery pack including a battery cell and a cell holder that are assembled together, according to embodiments;
FIG. 3 shows a partial enlarged view of FIG. 2;
FIG. 4 shows a partial enlarged view of FIG. 3, of an arrangement of a battery cell and a first conductive line;
FIG. 5 shows a connection state between a battery cell and a first conductive line according to embodiments;
FIG. 6 shows a partial enlarged view of a cell holder including a first conductive line and a voltage sensing line that are plated and patterned, according to embodiments; and
FIG. 7 shows a partial enlarged view of a cell holder including a temperature sensing line that is plated and patterned, according to embodiments.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

As used herein, the terms "and/or" and "or" are not exclusive terms, and include any and all combinations of one or more of the associated listed items.

The terms including "first", "second", etc., may be used to explain various components, but the components are not limited by the terms, e.g., the terms are not intended to imply sequential inclusion. These terms may be used to distinguish one element from another element. For example, a first component may be referred to as a second component without departing from the scope of the present disclosure, and similarly, the second component may be referred to as the first component.

The term used herein is used to describe embodiments of the present disclosure, and is not intended to limit and/or restrict the present disclosure. Singular forms include plural forms unless apparently indicated otherwise contextually. Moreover, it should be understood that the term "include", "have", or the like used herein is to indicate the presence of features, numbers, steps, operations, elements, parts, or a combination thereof described in the specifications, and does not preclude the presence or addition of one or more other features, numbers, steps, operations, elements, parts, or a combination thereof. The same reference numeral presented in each drawing represents a member that substantially performs the same function.

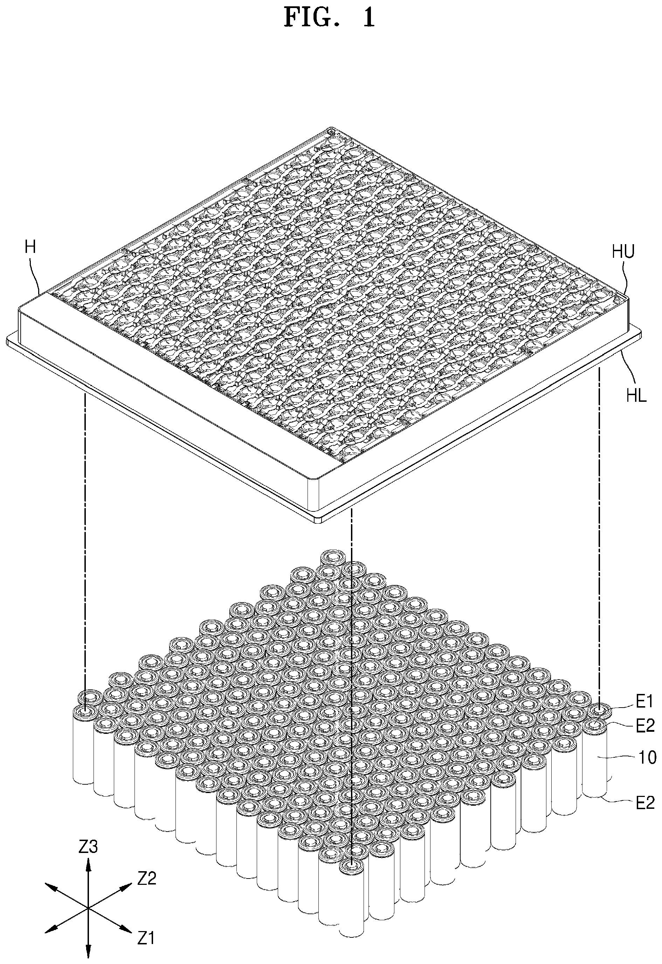

FIG. 1 shows an exploded perspective view of a battery pack according to embodiments.

Referring to FIG. 1, the battery pack includes a plurality of battery cells 10 and a cell holder H.

Each of the plurality of battery cells 10 according to embodiments may include first electrodes E1 and second electrodes E2 which have different polarities. The battery cell 10 may include the electrodes E1 and E2 at opposite end positions in a height direction Z3. In an implementation, the battery cell 10 may include a cylindrical battery cell 10 including circumferential side surfaces connecting the electrodes E1 and E2 at the opposite end positions.

In some embodiments, the first electrode E1 and the second electrode E2 may be formed in an upper end of the battery cell 10 in the height direction Z3 of the battery cell 10. In this case, the first electrode E1 may be formed at a center position of the upper end of the battery cell 10, and the second electrode E2 may be formed at an edge position surrounding the first electrode E1 in the upper end of the battery cell 10. The second electrode E2 may extend from the edge position of the upper end of the battery cell 10 to a lower end in the height direction Z3 of the battery cell 10. In an implementation, the second electrode E2 may be formed over the entire lower end of the battery cell 10 while forming the side surface between the upper end and the lower end of the battery cell 10.

The cell holder H provides a receiving space for the plurality of battery cells 10, and may be modularized into a single pack by physically binding the plurality of battery cells 10 to each other. Modularization of the plurality of battery cells 10 into a single pack may mean structurally binding the plurality of battery cells 10 to each other, like the cell holder H. In addition, modularization of the plurality of battery cells 10 into a single pack may mean electrically binding the plurality of battery cells 10 into the single pack by electrically connecting the plurality of different battery cells 10 as will be described below.

The cell holder H may modularize the plurality of battery cells 10 into a single pack by structurally binding the plurality of battery cells 10, and regulate assembly positions of the plurality of battery cells 10. In some embodiments, the cell holder H may include at least one cell holder H where an end position and/or the other end position of the battery cell 10 is assembled. In an implementation, the cell holder H may include a first holder and a second holder assembled to face each other with the plurality of battery cells 10 therebetween, and may include the plurality of battery cells 10 assembled at specified positions of the first and second holders. According to the invention, the battery pack comprises a cell holder H in which the plurality of battery cells 10 are assembled at a first side thereof.

In some embodiments, the cell holder H may correspond to an insulating structure. Herein, the insulating structure may form at least a part of the cell holder H and may form the entire cell holder H or a part thereof. In some embodiments, the insulating structure and the cell holder H may mean substantially the same structure, and hereinbelow, the insulating structure may be referred to as the cell holder H for convenience of understanding, but may also form the entire cell holder H or a part thereof.

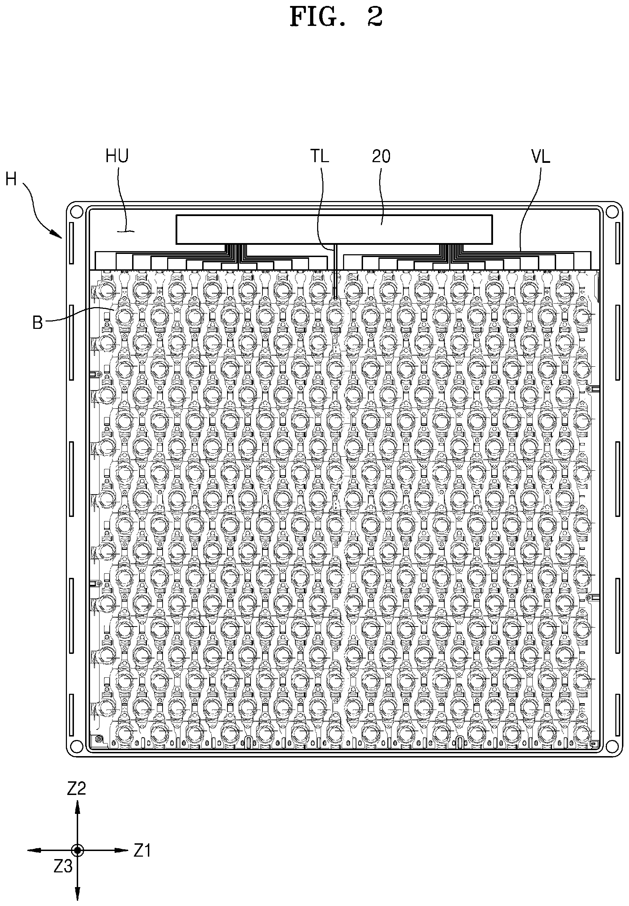

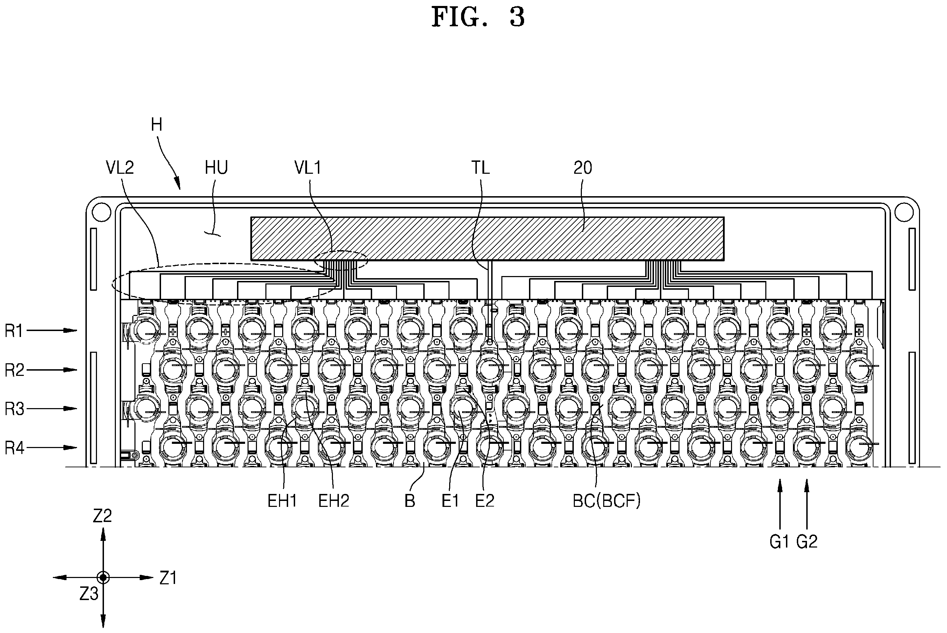

FIG. 2 shows a plan view of a battery pack including the battery cell 10 and the cell holder H assembled together, according to embodiments, and FIG. 3 shows a partial enlarged view of FIG. 2.

Referring to FIGS. 1 to 3, the plurality of battery cells 10 forming the battery pack are arranged in a first direction Z1 and a second direction Z2 that intersect each other. In an implementation, a row of the battery cells 10 may include a group of the battery cells 10 arranged in the first direction Z1, and a column of the battery cells 10 may include a group of the battery cells 10 arranged in the second direction Z2. The group of battery cells 10 arranged in the first direction Z1 may be arranged in the first direction Z1 from a front position to a rear position, and the group of battery cells 10 arranged in the second direction Z2 may be arranged in the second direction Z2 from a left position to a right position.

In the plurality of battery cells 10 assembled on the cell holder H, a row of the battery cells 10 arranged in the first direction Z1 is arranged as a plurality of rows R1, R2, R3, and R4 in the second direction Z2 intersecting the first direction Z1. In an embodiment, the battery pack may comprise a plurality of battery cells 10 in a row in a first direction Z1 and in a plurality of rows in a second direction Z2 intersecting the first direction Z1. The battery cells 10 of rows that are adjacent to each other in the second direction Z2 may be arranged to be alternately staggered with each other toward the front position or the rear position in the first direction Z1. According to such arrangement of the battery cells 10, among the battery cells 10 of rows adjacent in the second direction Z2, the battery cells 10 of any one row may be arranged to be inserted into a valley between the battery cells 10 of the other row. In an implementation, the battery cells 10 of any one row may be arranged to be biased relatively toward the front position (or the rear position) in the first direction Z1, and the battery cells 10 of the other row may be arranged to be biased relatively toward the rear position (or the front position) in the first direction Z1. As such, the battery cells 10 of rows adjacent in the second direction Z2 may be arranged to be staggered with each other relatively toward the front position and the rear position, such that the battery cells 10 of the adjacent rows may be arranged at a high density in a relatively small area and a battery pack favorable to compactness may be provided through the relatively dense arrangement of the battery cells 10.

In some embodiments, the battery cells 10 of a group arranged in the second direction Z2 may include the battery cells 10 of rows alternately arranged in the second direction Z2 rather than the battery cells 10 of all rows arranged in the second direction Z2. In an implementation, a first group of battery cells G1 arranged in the second direction Z2 may include the battery cells 10 of odd-numbered rows like the battery cells 10 of the first row R1 and the battery cells 10 of the third row R3, and a second group of battery cells G2 arranged in the second direction Z2 may include the battery cells 10 of even-numbered rows like the battery cells 10 of the second row R2 and the battery cells 10 of the fourth row R4. In embodiments, the first conductive line B may include a plurality of first conductive lines B electrically connecting the battery cells 10 to each other. In embodiments, each of the plurality of first conductive lines B may extend between a first group of battery cells G1 and a second group of battery cells G2, the first group of battery cells G1 and the second group of battery cells G2 may be adjacent to each other in the first direction Z1 and may be arranged in the second direction Z2.

In some embodiments, the battery cell 10 may be arranged such that an end having the first electrode E1 and the second electrode E2 formed therein is oriented toward a top surface side of the cell holder H and the other end having the second electrode E2 formed therein is oriented toward the opposite side. In an implementation, the battery cell 10 may be assembled to the cell holder H such that an end position of the battery cell 10 having both the first electrode E1 and the second electrode E2 formed therein is oriented toward a side of the cell holder H where a first conductive line B described below is arranged.

Referring to FIGS. 2 and 3, a battery pack according to the present invention includes the first conductive line B on the cell holder H. The first conductive line B is arranged on a plane of the cell holder H to electrically connect the plurality of battery cells 10 arranged on the cell holder H. The first conductive line B functions as a bus bar that electrically connects the plurality of battery cells 10 to one another. The first conductive line B is arranged on an opposite surface to the plurality of battery cells 10 on the cell holder H. The first conductive line B is arranged on the other side (i.e., an upper surface HU of the cell holder H) opposite to a side where the plurality of battery cells 10 are arranged (i.e., a lower surface HL (refer to FIG. 1) of the cell holder H), in the cell holder H.

The first conductive line B is formed by being plated and patterned on the cell holder H. According to the invention the battery pack comprises a first conductive line B of the cell holder H plated and patterned at a second side opposite to the first side electrically connecting different battery cells 10 to each other and extending in the second direction Z2. According to the invention, the first conductive line B is formed on the cell holder H through laser direct structuring (LDS). LDS may be a method of selectively processing a pattern by using a laser on a thermoplastic resin such as a plastic injection mold and forming a conductive material through a plating process. In an implementation, a pattern for functioning as a bus bar on a plane of the cell holder H is formed and plated through LSD, thereby forming the first conductive line B.

In some embodiments, when compared to other battery packs where a bus bar is attached to the cell holder H using an adhesive member, the battery pack including the first conductive line B formed by being directly plated and patterned on the plane of the cell holder H may simplify an assembling process between the cell holder H and the bus bar. In some embodiments, in comparison to other battery packs where the bus bar is inserted and injected together with injection of the cell holder H, the battery pack including the first conductive line B formed by being directly plated and patterned on the plane of the cell holder H may prevent deformation from occurring due to a difference in a shrinkage rate between metal and plastic.

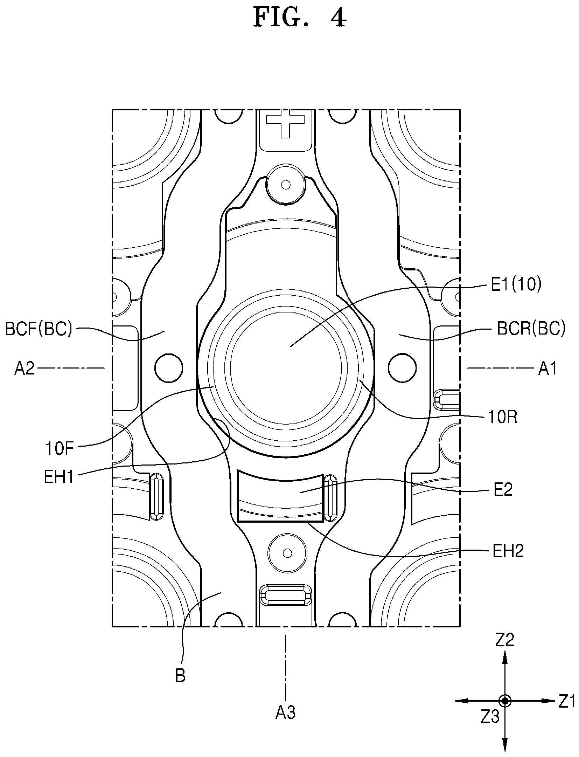

FIG. 4 shows a partial enlarged view of FIG. 3, of an arrangement of the battery cell 10 and the first conductive line B.

Referring to FIGS. 2 to 4, the first conductive line B is arranged to extend on a plane of the cell holder H in the second direction Z2. In an implementation, the first conductive line B may include a plurality of first conductive lines B that electrically connect the plurality of battery cells 10 on the upper surface HU of the cell holder H. Each first conductive line B may extend between a group of battery cells 10 (the first group of battery cells G1) arranged in the second direction Z2 and another group of battery cells 10 (the second group of battery cells G2) arranged in the second direction Z2.

The first conductive line B may extend in a zigzag pattern between the first group of battery cells G1 and the second group of battery cells G2 in the second direction Z2. In an implementation, the first conductive line B may extend between the first group of battery cells G1 and the second group of battery cells G2, which are adjacent to each other, in the first direction Z1, and may extend in a zigzag direction while forming a curved portion BC surrounding outer circumferential surfaces of the adjacent groups of battery cells 10 in the first direction Z1.

In each first conductive line B, the outer circumferential surfaces of the first group of battery cells G1 and the outer circumferential surfaces of the second group of battery cells G2, surrounded by any one first conductive line B, may be formed on opposite positions. In an implementation, the outer circumferential surface of the first group of battery cell G1 surrounded by any one first conductive line B may mean an outer circumferential surface at a rear position 10R in the first direction Z1, and the outer circumferential surface of the second group of battery cell G2 surrounded by the first conductive line B may mean an outer circumferential surface at a front position 10F in the first direction Z1. As such, when any one first conductive line B surrounds the opposite outer circumferential surfaces of the first and second groups of battery cells G1 and G2, it may mean that the first conductive line B surrounds the outer circumferential surface at a rear position 10R of the battery cell G1 of the first group at the rear position or the outer circumferential surface at a front position 10F of the battery cell G1 of the first group at the front position and surrounds the outer circumferential surface at a front position 10F of the battery cell G2 of the second group at the front position or the outer circumferential surface at a rear position 10R of the battery cell G2 of the second group at the rear position.

The battery cell 10 may be arranged to be surrounded by a front curved portion BCF of the first conductive line B at the front position and a rear curved portion BCR of the first conductive line B at the rear position.

When the first conductive line B surrounds the outer circumferential surface of the battery cell 10, it may include a case where the first conductive line B surrounds an outer circumferential surface of the first electrode E1 formed at the center position of the battery cell 10 while extending across the outer circumferential surface of the battery cell 10. In an implementation, the curved portion BC of the first conductive line B may surround the outer circumferential surface of the battery cell 10 or the outer circumferential surface of the first electrode E1 formed at the center position of the battery cell 10. In some embodiments, the curved portion BC of the first conductive line B may surround the outer circumferential surface of the first electrode E1 formed at the center position of the battery cell 10 while extending across the second electrode E2 formed at an edge position of the battery cell 10 to surround the first electrode E1.

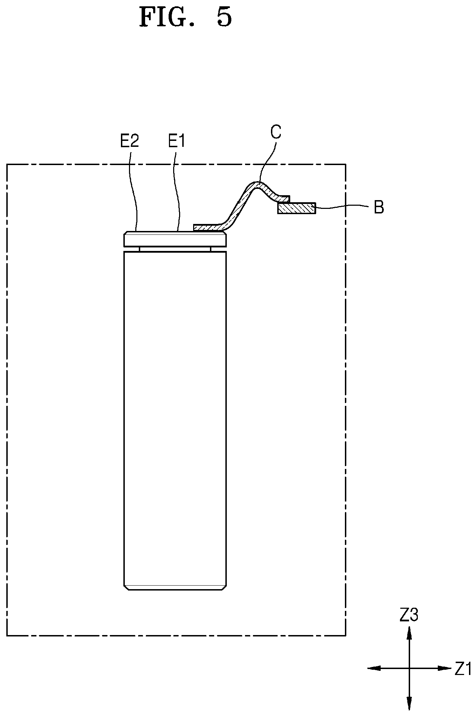

FIG. 5 shows a connection state between the battery cell 10 and the first conductive line B according to embodiments.

Referring to FIGS. 4 and 5, the first conductive line B may be electrically connected to the battery cell 10 via a connection member C between different first electrodes E1 and second electrodes E2 of the battery cell 10. Herein, the connection member C may include a conductive wire as a conductive member.

The connection member C may be connected to the first conductive line B at an end position and to the battery cell 10 at the other end position. In an implementation, the first conductive line B may be electrically connected to the first electrode E1 of the battery cell 10 through the connection member C extending between the first electrode E1 of the battery cell 10 and the first conductive line B and may be electrically connected to the second electrode E2 of the battery cell 10 through the connection member C extending between the second electrode E2 of the battery cell 10 and the first conductive line B.

In some embodiments, the first electrode E1 may be formed at the center position of the battery cell 10 at an end of the battery cell 10, and the second electrode E2 may be formed at an edge position surrounding the center position of the battery cell 10. In an implementation, the first electrode E1 and the second electrode E2 formed at the end position of the battery cell 10 may be exposed from the cell holder H through a first electrode hole EH1 and a second electrode hole EH2 of the cell holder H where the first conductive line B is arranged, and may be connected to the first conductive line B through the connection member C.

Referring to FIGS. 2 to 5, the plurality of battery cells 10 are electrically connected to each other by the first conductive line B. In an implementation, the first conductive line B may connect different battery cells 10 in parallel by connecting the same polarities of the different battery cells 10 or may connect different battery cells 10 in series by connecting different polarities of the different battery cells 10.

The first conductive line B may connect different battery cells 10 in parallel by connecting the same polarities of the different battery cells 10 through the connection member C. In an implementation, the first conductive line B may connect the different battery cells 10 in parallel by connecting the first electrodes E1 or the second electrodes E2 of the different battery cells 10. Similarly, the first conductive line B may connect the different battery cells 10 in series by connecting the different polarities of the different battery cells 10 through the connection member C. In an implementation, the first conductive line B may connect the different battery cells 10 in series by connecting the first electrodes E1 of the different battery cells 10 to the second electrodes E2 of the different battery cells 10.

In some embodiments, the plurality of battery cells 10 included in the battery pack may be electrically connected to each other such that they are connected in parallel in the second direction Z2 and in series in the first direction Z1. In an implementation, in the first conductive line B arranged between the first and second groups of battery cells G1 and G2 arranged adjacent to each other in the first direction Z1 and between the first and second groups of battery cells G1 and G2 in the second direction Z2, the first electrode E1 or the second electrode E2 may be connected to the first conductive line B in each battery cell 10 of the first group of battery cells G1 and the second electrode E2 or the first electrode E1 may be connected to the first conductive line B in each battery cell 10 of the second group of battery cells G2. In an implementation, with respect to any one first conductive line B, in the first group of battery cells G1 located at the front, the first conductive line B and the first electrode E1 may be connected through the connection member C, and in the second group of battery cells G2 located at the rear, the first conductive line B and the second electrode E2 may be connected through the connection member C, such that the battery cells G1 and G2 may be connected in parallel in the second direction Z2 and in series in the first direction Z1.

If the number of parallel battery cells 10 of the battery pack matches physical arrangement of the actual battery cells 10, the first conductive line B may be formed as a 1-shape structure. In an implementation, if the plurality of battery cells 10 included in the battery pack are arranged in parallel in the second direction Z2 and in series in the first direction Z1, the first conductive line B may be formed as a 1-shape structure extending in a zigzag pattern in the second direction Z2. In comparison to a bus bar having a fishbone shape, a lower current may flow through the bus bar of the 1-shape structure, reducing the amount of heat emission, and the bus bar of the 1-shape structure may be implemented as a thinner bus bar. Thus, in the battery pack according to embodiments, the first conductive line B of the 1-shape structure may be formed in the cell holder H through LDS, thus functioning as a bus bar.

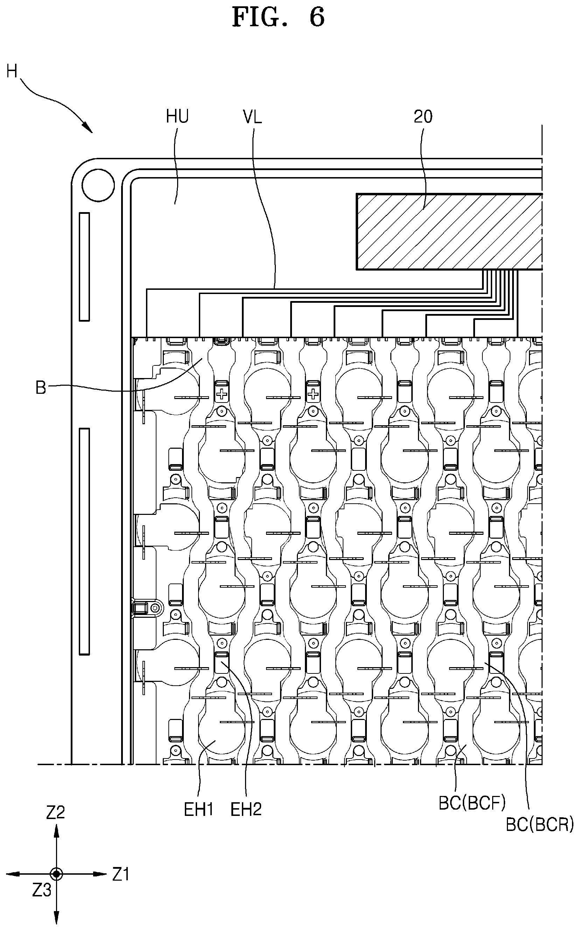

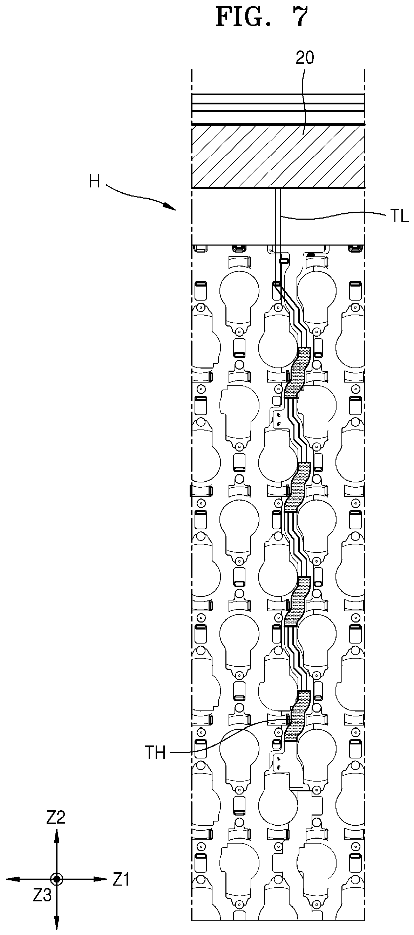

FIG. 6 shows a partial enlarged view of the cell holder H where the first conductive line B and a voltage sensing line VL are plated and patterned, according to embodiments, and FIG. 7 shows a partial enlarged view of the cell holder H where a temperature sensing line TL is plated and patterned, according to embodiments.

Referring to FIGS. 2, 3, 6, and 7, the battery pack according to embodiments may include a battery management system (BMS) 20 and a second conductive line that gathers state information about the plurality of battery cells 10 to transmit the state information to the BMS 20. The BMS 20 may monitor current, voltage, temperature, etc., of the battery cell 10, which are measured through a sensor, to predict a charge state and a lifetime of the battery cell 10, and perform a control operation to avoid over-charge, over-discharge, and over-current of a battery. The second conductive line may include a voltage sensing line VL for measuring a bank voltage of each battery cell 10 and a temperature sensing line TL for measuring a temperature of the battery cell 10. In an embodiment, the second conductive line may include a voltage sensing line VL that may be connected to the first conductive line B to sense a voltage and a temperature sensing line TL to sense a temperature at a certain position.

In some embodiments, the BMS 20 and the second conductive line may be arranged on the cell holder H. The BMS 20 may be arranged at a side in the second direction Z2 on the cell holder H, e.g., at a side on a top surface of the cell holder H where an end of the first conductive line B is arranged. In FIGS. 2, 3, 6, and 7, the BMS 20 is shown as being arranged on the top surface of the cell holder H where the first conductive line B and the second conductive line are arranged, but the BMS 20 may also be arranged at a side including a side surface of the cell holder H and connected to the second conductive line. In embodiments, an end of the second conductive line may be connected to the battery management system BMS, may extend in the second direction Z2, and may include a plurality of branch lines.

The voltage sensing line VL according to embodiments may sense a voltage of the battery cell 10 and transmit the same to the BMS 20. The voltage sensing line VL may include a plurality of voltage sensing lines VL for connection to each first conductive line B. In some embodiments, the voltage sensing line VL may include a main line VL1 connected to the BMS 20 and a branch line VL2 connected to each first conductive line B. In an implementation, one end of the main line VL1 of the voltage sensing line VL may be connected to the BMS 20 to extend in the second direction Z2, and the other end thereof may be connected to the branch line VL2 so as to be connected to each first conductive line B. Each voltage sensing line VL may connect an end of the first conductive line B to the BMS 20 on the cell holder H to transmit voltage information about the first conductive line B to the BMS 20.

The temperature sensing line TL according to some embodiments may sense the temperature of the battery cell 10 to transmit the same to the BMS 20. The temperature sensing line TL may be arranged on the cell holder H and connected to a thermistor TH for detecting the temperature of the battery cell 10 to transmit the temperature of the battery cell 10 to the BMS 20. In an implementation, the thermistor TH may be arranged at a certain position of the cell holder H including a central portion to measure the temperature of the battery cell 10, and the temperature sensing line TL may be connected to the thermistor TH to transmit the measured temperature of the battery cell 10 to the BMS 20. In an implementation, as shown in FIG. 7, the thermistors TH may be arranged in series such that two temperature sensing lines TL of an input line and an output line are arranged in a single line in the second direction Z2, or the thermistors TH may be arranged at various positions on the cell holder H and thus the temperature sensing lines TL may include a plurality of branch lines.

The second conductive line is formed by being plated and patterned on the cell holder H. The voltage sensing line VL and the temperature sensing line TL are formed on the cell holder H through LDS. Some other battery packs may require a separate connection structure for connection to the BMS 20 to measure a voltage and a temperature of the battery cell 10. However, the battery pack including the voltage sensing line VL and the temperature sensing line TL formed by being directly plated and patterned on a plane of the cell holder H may be implemented through LDS without a separate component for connection to the first conductive line B or the BMS 20. In an implementation, an aluminum block and a printed circuit board (PCB, or a flexible PCB (FPCB)) for connecting the bus bar to the BMS 20 through wirebonding may be omitted. Thus, designing integrally with the cell holder H may be possible, and a separate connection process may be omitted.

When compared to the first conductive line B, the voltage sensing line VL and the temperature sensing line TL may be implemented in a fine pattern on the cell holder H. In an implementation, a width of the first conductive line B may be related to a resistance and the amount of heat emission and thus may be large, and the second conductive line may be formed to have a narrow width. The battery pack including the voltage sensing line VL and the temperature sensing line TL that are implemented in a fine pattern through LDS may be formed integrally on the cell holder H without a separate connection member, and thus may have a less size of the BMS 20 than the other battery pack, allowing free designing thereof. In an embodiment, the first conductive line B may have a greater width than a width of the second conductive line.

The bus bar electrically connecting the plurality of battery cells 10 is formed as the first conductive line B through LDS, thus providing the battery pack where the cell holder H and the bus bar are integrally formed. In the battery pack according to embodiments, the battery cells 10 may be connected to the 1-shape first conductive line B such that the number of parallel cells of the module/pack matches arrangement of the actual physical battery cells 10. In the battery pack according to embodiments where the first conductive line B may be directly formed on the cell holder H through the LDS process, separate attachment component and attachment process may be omitted and deformation may be prevented from occurring due to a difference in a shrinkage rate between metal and plastic.

In the battery pack, the second conductive line for transmitting the state information about the battery, such as a voltage, a temperature, etc., to the BMS 20 is provided by being formed integrally with the cell holder H. According to embodiments, the cell holder H, the voltage sensing line VL, and the temperature sensing line TL may be integrally formed, such that a separate connection component may be omitted and the size of the BMS 20 may be implemented as being small, enabling free designing.

For the brevity of the specification, the description of conventional electronic configurations, control systems, software, and other functional aspects of the systems may be omitted. Connections of lines or connection members between components shown in the drawings are illustrative of functional connections and/or physical or circuit connections, and in practice, may be represented as alternative or additional various functional connections, physical connections, or circuit connections. In addition, when there is no specific mentioning, such as "essential" or "important", it may not be a necessary component for the application of the present disclosure. An expression such as "comprising", "including", etc., used herein has been used to be understood as terms of an open end of the description.

In the specification (especially, claims) of the present disclosure, the use of the term "the" and similar indicators thereof may correspond to both the singular and the plural. In addition, when the range is described in the present disclosure, the range includes the disclosure to which an individual value falling within the range is applied (unless stated otherwise), and is the same as the description of an individual value constituting the range in the detailed description of the present disclosure. Finally, when there is no apparent description of the order of operations constituting the method according to the present disclosure or a contrary description thereof, the operations may be performed in an appropriate order. However, the present disclosure is not necessarily limited according to the describing order of the operations. The use of all examples or exemplary terms (for example, etc.) in the present disclosure are to simply describe the present disclosure in detail, and unless the range of the present disclosure is not limited by the examples or the exemplary terms unless limited by the claims.

According to the present disclosure, a battery pack is provided in which by replacing a bus bar electrically connecting a plurality of battery cells to each other with a conductive pattern on a cell holder, the cell holder formed integrally with the bus bar is provided and a part for sensing a voltage and a temperature of the battery cell is replaced with the conductive pattern on the cell holder, thereby simplifying a manufacturing process without a separate connection component.

By way of summation and review, small mobile devices such as mobile phones may operate for a certain amount of time based on the output and capacity of a single battery, whereas for devices requiring long-term driving and high-power operations such as electric vehicles, hybrid vehicles, etc., consuming a lot of power, a secondary battery of a module type including a plurality of batteries may be preferred due to output and capacity issues. The output voltage or output current may be increased with the number of built-in batteries.

Embodiments of the present disclosure include a battery pack in which, by replacing a bus bar electrically connecting a plurality of battery cells to each other with a conductive pattern on a cell holder, the cell holder is formed integrally with the bus bar and a component for sensing a voltage and a temperature of the battery cell is replaced with the conductive pattern on the cell holder, thereby simplifying a manufacturing process without a separate connection component.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

## Claims

1. A battery pack, comprising:
a plurality of battery cells (10) in a row in a first direction (Z1) and in a plurality of rows in a second direction (Z2) intersecting the first direction (Z1);
a cell holder (H) in which the plurality of battery cells (10) are assembled at a first side thereof;
a first conductive line (B) of the cell holder (H) plated and patterned at a second side opposite to the first side electrically connecting different battery cells (10) to each other and extending in the second direction (Z2), the first conductive line (B) configured to function as a bus bar; and
a second conductive line plated and patterned at the second side of the cell holder (H) to collect state information about different battery cells (10), **characterized in that**
the first conductive line (B) and the second conductive line are formed on the cell holder (H) through laser direct structuring.

2. The battery pack as claimed in claim 1, wherein the first conductive line (B) has a greater width than a width of the second conductive line.

3. The battery pack as claimed in claim 1 or 2, wherein the plurality of battery cells (10) are arranged in parallel in the second direction (Z2) and in series in the first direction (Z1) and the first conductive line (B) is formed as a 1-shape structure extending in a zigzag pattern in the second direction (Z2).

4. The battery pack as claimed in any of claims 1 to 3, wherein the second conductive line includes a voltage sensing line (VL) that is connected to the first conductive line (B) to sense a voltage and a temperature sensing line (TL) to sense a temperature at a certain position.

5. The battery pack as claimed in any of claims 1 to 4, wherein the plurality of battery cells (10) are arranged such that battery cells (10) in adjacent rows in the second direction (Z2) are alternately staggered with each other at front and rear positions in the first direction (Z1).

6. The battery pack as claimed in any of claims 1 to 5, wherein the battery cells (10) of any one row are arranged to be inserted into a valley between the battery cells (10) of an adjacent row.

7. The battery pack as claimed in any of claims 1 to 6, wherein the battery cells (10) of any one row are arranged to be biased relatively toward the front position or the rear position in the first direction (Z1), and the battery cells (10) of the adjacent row are arranged to be biased relatively toward the rear position or the front position in the first direction (Z1).

8. The battery pack as claimed in any of claims 1 to 7, wherein:
the first conductive line (B) includes a plurality of first conductive lines (B) electrically connecting the battery cells (10) to each other, and
each of the plurality of first conductive lines (B) extends between a first group of battery cells (G1) and a second group of battery cells (G2), the first group of battery cells (G1) and the second group of battery cells (G2) being adjacent to each other in the first direction (Z1) and being arranged in the second direction (Z2).

9. The battery pack as claimed in claim 8, wherein:
the first group of battery cells (G1) and the second group of battery cells (G2) are arranged in the second direction (Z2) and are connected to each other in parallel, and
the first group of battery cells (G1) and the second group of battery cells (G2) are connected to each other in series in the first direction (Z1).

10. The battery pack as claimed in claim 8 or 9, wherein each of the plurality of first conductive lines (B) extends in a zigzag pattern and has a curved portion (BC) surrounding an outer circumferential surface of an electrode at a center position of the first and second groups of battery cells (G1, G2).

11. The battery pack as claimed in any of claims 1 to 10, wherein the battery cells (10) are arranged to be surrounded by a front curved portion (BCF) of the first conductive line (B) at the front position and a rear curved portion (BCR) of the first conductive line (B) at the rear position.

12. The battery pack as claimed in any of claims 1 to 11, wherein an end of the second conductive line is connected to a battery management system (BMS), extends in the second direction (Z2), and includes a plurality of branch lines.

13. The battery pack as claimed in any of claims 1 to 12 wherein:
first and second electrodes (E1, E2) at an end of a battery cell (10) are exposed to outside of the cell holder (H) through first and second electrode holes (EH1, EH2) in the cell holder (H) and are connected to the first conductive line (B) through a connection member (C), and
the second electrode (E2) extends to another end of the battery cell (10).

## Patentansprüche

1. Batteriepack, umfassend:
mehrere Batteriezellen (10) in einer Reihe in einer ersten Richtung (Z1) und in mehreren Reihen in einer zweiten Richtung (Z2), die die erste Richtung (Z1) schneidet;
einen Zellenhalter (H), in dem die mehreren Batteriezellen (10) an einer ersten Seite davon zusammengebaut sind;
eine erste leitfähige Leitung (B) des Zellenhalters (H), die an einer der ersten Seite gegenüberliegenden zweiten Seite plattiert und gemustert ist, unterschiedliche Batteriezellen (10) elektrisch miteinander verbindet und sich in der zweiten Richtung (Z2) erstreckt, wobei die erste leitfähige Leitung (B) so konfiguriert ist, dass sie als Sammelschiene fungiert; und
eine zweite leitfähige Leitung, die an der zweiten Seite des Zellenhalters (H) plattiert und gemustert ist, um Zustandsinformationen über unterschiedliche Batteriezellen (10) zu sammeln, **dadurch gekennzeichnet, dass**
die erste leitfähige Leitung (B) und die zweite leitfähige Leitung durch Laserdirektstrukturierung auf dem Zellenhalter (H) ausgebildet sind.

2. Batteriepack nach Anspruch 1, wobei die erste leitfähige Leitung (B) eine größere Breite als die zweite leitfähige Leitung aufweist.

3. Batteriepack nach Anspruch 1 oder 2, wobei die mehreren Batteriezellen (10) parallel in der zweiten Richtung (Z2) und in Reihe in der ersten Richtung (Z1) angeordnet sind und die erste leitfähige Leitung (B) als eine 1-förmige Struktur ausgebildet ist, die sich in einem Zickzackmuster in der zweiten Richtung (Z2) erstreckt.

4. Batteriepack nach einem der Ansprüche 1 bis 3, wobei die zweite leitfähige Leitung eine Spannungsmessleitung (VL), die mit der ersten leitfähigen Leitung (B) verbunden ist, um eine Spannung zu messen, und eine Temperaturmessleitung (TL) umfasst, um eine Temperatur an einer bestimmten Position zu messen.

5. Batteriepack nach einem der Ansprüche 1 bis 4, wobei die mehreren Batteriezellen (10) so angeordnet sind, dass Batteriezellen (10) in benachbarten Reihen in der zweiten Richtung (Z2) an vorderen und hinteren Positionen in der ersten Richtung (Z1) abwechselnd versetzt zueinander angeordnet sind.

6. Batteriepack nach einem der Ansprüche 1 bis 5, wobei die Batteriezellen (10) einer beliebigen Reihe so angeordnet sind, dass sie in eine Vertiefung zwischen den Batteriezellen (10) einer benachbarten Reihe eingeführt sind.

7. Batteriepack nach einem der Ansprüche 1 bis 6, wobei die Batteriezellen (10) einer beliebigen Reihe so angeordnet sind, dass sie relativ zur vorderen Position oder zur hinteren Position in der ersten Richtung (Z1) vorgespannt sind, während die Batteriezellen (10) der benachbarten Reihe so angeordnet sind, dass sie relativ zur hinteren Position oder zur vorderen Position in der ersten Richtung (Z1) vorgespannt sind.

8. Batteriepack nach einem der Ansprüche 1 bis 7, wobei:
die erste leitfähige Leitung (B) mehrere erste leitfähige Leitungen (B) umfasst, die die Batteriezellen (10) elektrisch miteinander verbinden, und
jede der mehreren ersten leitfähigen Leitungen (B) sich zwischen einer ersten Gruppe von Batteriezellen (G1) und einer zweiten Gruppe von Batteriezellen (G2) erstreckt, wobei die erste Gruppe von Batteriezellen (G1) und die zweite Gruppe von Batteriezellen (G2) in der ersten Richtung (Z1) nebeneinander liegen und in der zweiten Richtung (Z2) angeordnet sind.

9. Batteriepack nach Anspruch 8, wobei:
die erste Gruppe von Batteriezellen (G1) und die zweite Gruppe von Batteriezellen (G2) in der zweiten Richtung (Z2) angeordnet und parallel miteinander verbunden sind, und
die erste Gruppe von Batteriezellen (G1) und die zweite Gruppe von Batteriezellen (G2) in der ersten Richtung (Z1) in Reihe miteinander verbunden sind.

10. Batteriepack nach Anspruch 8 oder 9, wobei jede der mehreren ersten leitfähigen Leitungen (B) sich in einem Zickzackmuster erstreckt und einen gekrümmten Abschnitt (BC) aufweist, der eine Außenumfangsfläche einer Elektrode an einer Mittelposition der ersten und der zweiten Gruppe von Batteriezellen (G1, G2) umgibt.

11. Batteriepack nach einem der Ansprüche 1 bis 10, wobei die Batteriezellen (10) so angeordnet sind, dass sie an der vorderen Position von einem vorderen gekrümmten Abschnitt (BCF) der ersten leitfähigen Leitung (B) und an der hinteren Position von einem hinteren gekrümmten Abschnitt (BCR) der ersten leitfähigen Leitung (B) umgeben sind.

12. Batteriepack nach einem der Ansprüche 1 bis 11, wobei ein Ende der zweiten leitfähigen Leitung mit einem Batteriemanagementsystem (BMS) verbunden ist, sich in der zweiten Richtung (Z2) erstreckt und mehrere Abzweigleitungen umfasst.

13. Batteriepack nach einem der Ansprüche 1 bis 12, wobei:
eine erste und eine zweite Elektrode (E1, E2) an einem Ende einer Batteriezelle (10) durch ein erstes bzw. ein zweites Elektrodenloch (EH1, EH2) in dem Zellenhalter (H) zur Außenseite des Zellenhalters (H) freiliegen und über ein Verbindungselement (C) mit der ersten leitfähigen Leitung (B) verbunden sind, und
die zweite Elektrode (E2) sich zu dem anderen Ende der Batteriezelle (10) erstreckt.

## Revendications

1. Bloc-batterie, comportant :
une pluralité d'éléments de batterie (10) dans une rangée dans une première direction (Z1) et dans une pluralité de rangées dans une seconde direction (Z2) faisant intersection avec la première direction (Z1) ;
un porte-éléments (H) dans lequel la pluralité d'éléments de batterie (10) sont assemblés sur un premier côté de celui-ci ;
une première ligne conductrice (B) du porte-éléments (H) plaquée et ayant des motifs sur un second côté opposé au premier côté connectant électriquement différents éléments de batterie (10) les uns aux autres et s'étendant dans la seconde direction (Z2), la première ligne conductrice (B) étant configurée pour fonctionner comme une barre omnibus ; et
une seconde ligne conductrice plaquée et ayant des motifs sur le second côté du porte-éléments (H) pour collecter des informations d'état concernant différents éléments de batterie (10), **caractérisé en ce que**
la première ligne conductrice (B) et la seconde ligne conductrice sont formées sur le porte-éléments (H) par structuration directe au laser.

2. Bloc-batterie selon la revendication 1, dans lequel la première ligne conductrice (B) possède une plus grande largeur qu'une largeur de la seconde ligne conductrice.

3. Bloc-batterie selon la revendication 1 ou 2, dans lequel la pluralité d'éléments de batterie (10) sont agencés en parallèle dans la seconde direction (Z2) et en série dans la première direction (Z1) et la première ligne conductrice (B) se présente sous la forme d'une structure en forme de 1 s'étendant selon un motif en zigzag dans la seconde direction (Z2).

4. Bloc-batterie selon l'une quelconque des revendications 1 à 3, dans lequel la seconde ligne conductrice inclut une ligne de détection de tension (VL) qui est connectée à la première ligne conductrice (B) pour détecter une tension et une ligne de détection de température (TL) pour détecter une température à une certaine position.

5. Bloc-batterie selon l'une quelconque des revendications 1 à 4, dans lequel la pluralité d'éléments de batterie (10) sont agencés de sorte que des éléments de batterie (10) dans des rangées adjacentes dans la seconde direction (Z2) soient alternativement décalés les uns des autres à des positions avant et arrière dans la première direction (Z1).

6. Bloc-batterie selon l'une quelconque des revendications 1 à 5, dans lequel les éléments de batterie (10) d'une quelconque rangée sont agencés pour être insérées dans une vallée entre les éléments de batterie (10) d'une rangée adjacente.

7. Bloc-batterie selon l'une quelconque des revendications 1 à 6, dans lequel les éléments de batterie (10) d'une quelconque rangée sont agencés pour être sollicités relativement vers la position avant ou la position arrière dans la première direction (Z1), et les éléments de batterie (10) de la rangée adjacente sont agencés pour être sollicités relativement vers la position arrière ou la position avant dans la première direction (Z1).

8. Bloc-batterie selon l'une quelconque des revendications 1 à 7, dans lequel :
la première ligne conductrice (B) inclut une pluralité de premières lignes conductrices (B) connectant électriquement les éléments de batterie (10) les uns aux autres, et
chacune de la pluralité de premières lignes conductrices (B) s'étend entre un premier groupe d'éléments de batterie (G1) et un second groupe d'éléments de batterie (G2), le premier groupe d'éléments de batterie (G1) et le second groupe d'éléments de batterie (G2) étant adjacents l'un à l'autre dans la première direction (Z1) et étant agencés dans la seconde direction (Z2).

9. Bloc-batterie selon la revendication 8, dans lequel :
le premier groupe d'éléments de batterie (G1) et le second groupe d'éléments de batterie (G2) sont agencés dans la seconde direction (Z2) et sont connectés l'un à l'autre en parallèle, et
le premier groupe d'éléments de batterie (G1) et le second groupe d'éléments de batterie (G2) sont connectés l'un à l'autre en série dans la première direction (Z1).

10. Bloc-batterie selon la revendication 8 ou 9, dans lequel chacune de la pluralité de premières lignes conductrices (B) s'étend selon un motif en zigzag et possède une portion incurvée (BC) encerclant une surface circonférentielle externe d'une électrode à une position centrale des premier et second groupes d'éléments de batterie (G1, G2).

11. Bloc-batterie selon l'une quelconque des revendications 1 à 10, dans lequel les éléments de batterie (10) sont agencés pour être encerclés par une partie avant incurvée (BCF) de la première ligne conductrice (B) à la position avant et une partie arrière incurvée (BCR) de la première ligne conductrice (B) à la position arrière.

12. Bloc-batterie selon l'une quelconque des revendications 1 à 11, dans lequel une extrémité de la seconde ligne conductrice est connectée à un système de gestion de batterie (BMS), s'étend dans la seconde direction (Z2), et inclut une pluralité de lignes de ramification.

13. Bloc-batterie selon l'une quelconque des revendications 1 à 12 dans lequel :
des première et seconde électrodes (E1, E2) à une extrémité d'un élément de batterie (10) sont exposées à l'extérieur du porte-éléments (H) à travers des premier et second trous d'électrode (EH1, EH2) dans le porte-éléments (H) et sont connectées à la première ligne conductrice (B) par le biais d'un organe de connexion (C), et
la seconde électrode (E2) s'étend jusqu'à une autre extrémité de l'élément de batterie (10).
